Europäisches Patentamt

European Patent Office

Office européen des brevets

(19)

(11) Veröffentlichungsnummer : **0 287 842 B1**

# EUROPÄISCHE PATENTSCHRIFT

(12)

(45) Veröffentlichungstag der Patentschrift :
**12.06.91 Patentblatt 91/24**

(51) Int. Cl.⁵ : **C08F 8/00, C08F 299/02,
C09D 133/06, C08L 33/06**

(21) Anmeldenummer : **88104876.3**

(22) Anmeldetag : **25.03.88**

(54) **Härtbare Zusammensetzung auf Basis eines Michael-Additionsproduktes, Verfahren zu seiner Herstellung sowie seine Verwendung.**

Verbunden mit 88902842.9/0342205
(europäische
Anmeldenummer/Veröffentlichungsnummer)
durch Entscheidung vom 12.07.90.
Die Akte enthält technische Angaben, die nach
dem Eingang der Anmeldung eingereicht
wurden und die nicht in dieser Patentschrift
enthalten sind.

(30) Priorität : **28.03.87 DE 3710431**

(43) Veröffentlichungstag der Anmeldung :
**26.10.88 Patentblatt 88/43**

(45) Bekanntmachung des Hinweises auf die
Patenterteilung :
**12.06.91 Patentblatt 91/24**

(84) Benannte Vertragsstaaten :
**AT BE CH DE ES FR GB IT LI NL SE**

(56) Entgegenhaltungen :
**EP-A- 0 158 161
EP-A- 0 160 824
US-A- 4 408 018**

(73) Patentinhaber : **BASF Lacke + Farben
Aktiengesellschaft
Max-Winkelmann-Strasse 80
W-4400 Münster (DE)**

(72) Erfinder : **Jung, Werner Alfons, Dr.
Uhrwerkerstrasse 65
W-4715 Ascheberg (DE)**

(74) Vertreter : **Leifert, Elmar, Dr.
BASF Lacke + Farben AG Patentabteilung
Max-Winkelmann-Strasse 80 Postfach 61 23
W-4400 Münster (DE)**

EP 0 287 842 B1

## Beschreibung

Die Erfindung betrifft ein Verfahren zur Herstellung einer härtbaren Zusammensetzung, enthaltend als Michael-Akzeptor-Komponente A) Verbindungen mit mindestens zwei aktivierten Doppelbindungen (I), wobei es sich um α, β-ungesättigte Carbonylverbindungen, α, β-ungesättigte Carbonsäureester oder α, β-ungesättigter Nitrile handelt und als Michael-Donator Verbindungen B), die mindestens zwei aktive Wasserstoffatome oder mindestens zwei Gruppen mit aktiven Wasserstoffatomen oder mindestens ein aktives Wasserstoffatom und mindestens eine Gruppe mit einem aktiven Wasserstoffatom enthalten und übliche Zusatzstoffe, Katalysatoren, ggf. Pigmente und organische Lösungsmittel.

Aus der DE-OS 35 08 399 sind Zusammensetzungen bekannt, die erhalten werden durch Umsetzung von Verbindungen mit mindestens zwei aktivierten Doppelbindungen (I) mit Verbindungen, die aktive Wasserstoffatome enthalten. Diese Zusammensetzungen reagieren unter dem Einfluß von Basen zu einem Michael-Additionsprodukt. Die Michael-Akzeptor-Komponente kann beispielsweise abgeleitet sein von Hydroxylgruppen enthaltenden Acrylatharzen, Epoxidharzen, oligomeren Polyolen oder oligomeren Polyaminen. Die Michael-Donator-Komponente kann beispielsweise abgeleitet sein von Polyolen, Polyaminen oder Polymercaptanen. Die in der DE-OS 35 08 399 beschriebenen Bindemittel können als Zweikomponenten-Systeme für Überzüge verwendet werden. Sie härten unter Katalyse von Basen bei Raumtemperatur und bei erhöhten Temperaturen leicht aus. Die Vorteile der beschriebenen Systeme bestehen darin, daß sie zur Härtung keine freien Isocyanate benötigen. Nachteilig sind die bekannten Systeme jedoch in bezug auf Lösemittelbeständigkeit, Chemikalienfestigkeit und Elastizität der aus ihnen erhaltenen Überzüge.

Aus der US-PS 4, 408, 018 sind Michael-Additionsprodukte bekannt aus Acrylatpolymeren mit Acetoacetatgruppen und Polyacrylat-Vernetzern mit für die Michael-Addition aktivierten Doppelbindungen. Auch die aus der US-PS 4, 408, 018 bekannten Systeme führen zu Überzügen mit nachteilien Eigenschaften bezüglich Lösemittelbeständigkeit, Chemikalienfestigkeit und Elastizität.

Die EP-A-158 161 beschreibt bei niedrigen Temperaturen aushärtende Überzugszusammensetzungen auf Basis von hydroxylgruppenhaltigen, verzweigten Acrylatcopolymerisaten und Melamin-Formaldehydharzen oder Polyisocyanaten als Vernetzungsmittel. Bei der Polymerisation zur Herstellung des Acrylatcopolymerisats werden 3 bis 25 Gew.-% an Monomeren mit mindestens zwei polymerisierbaren, olefinisch ungesättigten Doppelbindungen eingesetzt. Die Überzugsmittel auf Basis der beschriebenen Systeme haben eine gute Benzinbeständigkeit und eine gute Beständigkeit gegenüber langfristiger Belastung durch Wasser oder Wasserdampf. Nachteilig wirken sich jedoch die als Vernetzer eingesetzten Melamin-Formaldehydharze odr Polyisocyanate aus toxikologischen Gründen aus.

Die Aufgabe der vorliegenden Erfindung bestand darin, Überzugsmittel zu schaffen, die bei niedrigen Temperaturen aushärten können, daher vorzugsweise in der Autoreparaturlackierung einsetzbar sind, weitgehend isocyanatfrei sind und verbesserte Eigenschaften, verglichen mit den Systemen aus der DE-OS 35 08 399 in bezug auf Lösemittelbeständigkeit, Chemikalienfestigkeit und Elastizität aufweisen.

Diese Aufgabe wird erfindungsgemäß durch das eingangs genannte Verfahren zur Herstellung der härtbaren Zusammensetzung dadurch gelöst, daß zunächst ein lösliches verzweigtes Acrylatcopolymerisat (P) hergestellt wird durch Copolymerisation von

a) 3 bis 30 Gew.-% Monomeren mit mindestens zwei ethylenisch ungesättigten polymerisierbaren Doppelbindungen,

b) 5 bis 60 Gew.-% Monomeren mit einer funktionellen Gruppe und

c) bis zu 92 Gew.-% weiteren ethylenisch ungesättigten Monomeren,

wobei die Summe von a), b) und c) 100 Gew.-% beträgt, in einem organischen Lösungsmittel bei 80 bis 130°C, vorzugsweise bei 90 bis 120°C, unter Verwendung von mindestens 0,5 Gew.-%, vorzugsweise mindestens 2,5 Gew.-%, bezogen auf das Gesamtgewicht der Monomeren a), b) und c), eines Polymerisationsreglers und unter Verwendung von Polymerisationsinitiatoren, wobei ein vorvernetztes, nicht geliertes Produkt erhalten wird und anschließend das lösliche verzweigte Acrylatcopolymerisat (P) unter Bildung von (A) mit einer Verbindung (1) umgesetzt wird, die neben einer mit den funktionellen Gruppen der Monomeren b) von (P) rekationsfähigen Gruppe mindestens eine aktivierte Doppelbindung (I) enthält, und/oder

das verzweigte lösliche Acrylatcopolymerisat (P) unter Bildung von (B) mit einer Verbindung (2) umgesetzt wird, die außer einer mit den funktionellen Gruppen der Monomeren b) von (P) reaktionsfähigen Gruppe mindestens ein aktives Wasserstoffatom oder mindestens eine Gruppe mit einem aktiven Wasserstoffatom enthält und (A) und (B) in organischem Lösungsmittel ggf. mit Pigmenten und üblichen Zusatzstoffen durch Mischen und ggf. Dispergieren zu einer härtbaren Zusammensetzung verarbeitet werden und kurz vor der Anwendung zur Aushärtung ein Katalysator zugefügt wird.

Bei den Verbindungen A) handelt es sich um Verbindungen, die aktivierte olefinisch ungesättigte Gruppen enthalten und als Michael-Akzeptor dienen können. Verbindungen der Komponente B) bilden unter dem Einfluß geeigneter Katalysatoren Carbanionen, welche an die aktivierten Doppelbindungen der Komponente A) addiert werden. Die Verbindungen der Komponente B) sind Michael-Donatoren. Erfindungsgemäß soll mindestens eine der Komponenten A) und B) auf einem verzweigten löslichen Acrylatcopolymerisat (P) basieren, d.h, aus diesem erhältlich sein. Erfindungsgemäß kann daher die Komponente A) erhältlich sein durch Umsetzung des verzweigten löslichen Acrylatcopolymerisats (P) mit einer Verbindung (1), die mindestens eine aktivierte Doppelbindung (I) enthält.

Es ist auch möglich, daß die Komponente B) erhältlich ist durch Umsetzung des verzweigten löslichen Acrylatcopolymerisats (P) mit einer Verbindung (2), die außer einer mit dem Acrylatcopolymerisat (P) reaktionsfähigen Gruppe mindestens ein aktives Wasserstoffatom oder mindestens eine Gruppe mit einem aktiven Wasserstoffatom enthält.

Das lösliche verzweigte Acrylatcopolymerisat (P) wird also bei dem erfindungsgemäßen Verfahren als Vorstufe für die Verbindungen A) und/oder B) eingesetzt. Das verzweigte Acrylatcopolymerisat ist erhältlich durch Copolymerisation von 3 bis 30 Gew.-%, bezogen auf das Gesamtgewicht der Monomeren, Monomeren mit mindestens zwei ethylenisch ungesättigten Doppelbindungen.

Als Komponente a) können vorteilhaft Verbindungen der allgemeinen Formel

$$CH_2 = \underset{\underset{R}{|}}{\overset{\overset{R}{|}\ \overset{O}{\|}}{C}} - \overset{O}{\underset{\|}{C}} - X - (CH_2)_n - X - \overset{O}{\underset{\|}{C}} - \underset{\underset{R}{|}}{\overset{R}{|}}{C} = CH_2$$

mit

R = H oder CH$_3$

X = O, NR', S   mit R' = H, Alkyl, Aryl

n = 2 bis 8

verwendet werden.

Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Weiterhin sind auch Divinylverbindungen, wie z.B. Divinylbenzol, geeignet als Komponente a). Selbstverständlich können auch Mischungen mehrfach funktioneller Monomere verwendet werden.

Die Komponente a) kann auch ein Umsetzungsprodukt aus einer Carbonsäure mit einer polymerisierbaren, olefinisch ungesättigten Doppelbindung und Glycidylacrylat und/oder Glycidylmethacrylat sein. Die Komponente a) kann weiterhin eine mit einem ungesättigten, eine polymerisierbare Doppelbindung enthaltenden Alkohol veresterte Polycarbonsäure oder ungesättigte Monocarbonsäure sein.

Vorteilerhafterweise werden als Komponente a) Umsetzungsprodukte eines Polyisocyanats mit ungesättigten, polymerisierbare Doppelbindungen enthaltenden Alkoholen oder Aminen eingesetzt. Als Beispiel hierfür ist das Reaktionsprodukt aus einem Mol Hexamethylendiisocyanat und zwei Mol Allylalkohol zu nennen.

Eine weitere vorteilhafte Komponente a) ist ein Diester von Polyethylenglykol und/oder Polypropylenglykol mit einem mittleren Molekulargewicht von weniger als 1500, vorzugsweise von weniger als 1000, und Acrylsäure und/oder Methacrylsäure.

Als Komponente b) werden Monomere mit einer funktionellen Gruppe verwendet, wobei sich die Auswahl dieser funktionellen Gruppe richtet nach Art der Verbindungen (1) und (2) ; durch Reaktion der löslichen verzweigten Acrylatcopolymerisate mit der Verbindung (1) oder (2) werden die Verbindungen (A) bzw. (B) erhalten. Auf die erfindungsgemäß einsetzbaren Monomeren b) sei an späterer Stelle eingegangen.

Die weiteren polymerisierbaren Monomeren der Komponente c) können vorteilhafterweise ausgewählt sein aus der Gruppe Styrol, Vinyltoluol, Alkylester der Acrylsäure und der Methacrylsäure, Alkoxiethylacrylate und Aryloxiethylacrylate und der entsprechenden Methacrylate, Ester der Malein- und Fumarsäure. Als weitere Beispiele seien genannt Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacrylat, Octylmethacrylat, 3,5,5-Trimethylhexylmethacrylat, Decylmethacrylat, Dodecylmethacrylat, Hexadecylmethacrylat, Octadecylmethacrylat, Butoxiethylacrylat, Butoxiethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxiethylacrylat. Weitere Monomere können eingesetzt werdern, sofern sie nicht zu unerwünschten Eigenschaften des Copolymerisats führen. Die Auswahl der Komponente c) richtet sich weitgehend nach den gewünschten Eigenschaften des Acrylatcoplymerisats in bezug auf Elastizität, Härte, Verträglichkeit und Polarität. Diese Eigenschaften lassen sich zum Teil mit Hilfe der bekannten Glasübergangstemperaturen der Monomeren steuern.

Die Komponente b) des Acrylatcopolymerisats kann vorteilhafterweise ein hydroxylgruppenhaltiges ethylenisch ungesättigtes Monomer sein. Beispiele hierfür sind Hydroxyalkylester und Acrylsäure und/oder Methacrylsäure mit einer primären Hydroxylgruppe. Die Komponente b) kann auch zumindest teilweise ein Umsetzungsprodukt aus einem Mol Hydroxyethylacrylat und/oder Hydroxyethylmethacrylat und durchschnittlich zwei Mol $\varepsilon$-Caprolacton sein. Als Hydroxylgruppen enthaltende Monomere können aber auch hydroxylgruppenhaltige Ester der Acrylsäure und/oder Methacrylsäure mit einer sekundären Hydroxylgruppe eingesetzt werden. Vorteilhafterweise sind dies Umsetzungsprodukte aus Acrylsäure und/oder Methacrylsäure mit dem Glycidylester einer Carbonsäure mit einem tertiären $\alpha$-Kohlenstoffatom. Beispiele für hydroxylgruppenhaltige ethylenisch ungesättigte Monomere sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Beispiele für OH-Monomere mit einer sekundären OH-Gruppe sind 2-Hydroxypropylacrylat, 2-Hydroxibutylacrylat, 3-Hydroxibutylacrylat und die entsprechenden Methacrylate.

Vorteilhaft wird (A) aus einem löslichen vernetzten Acrylatcopolymerisat hergestellt, wobei die Komponente b) des Acrylatcopolymerisats ein hydroxylgruppenhaltiges Monomer ist und die Verbindung (1) ein Monoester $\alpha$, $\beta$-ungesättigter Carbonsäuren ist. In diesem Fall wird das verzweigte, Hydroxylgruppen enthaltende Copolymerisat nach der Polymerisation mit Monoester $\alpha$, $\beta$-ungesättigter Carbonsäuren in einer Umesterungsreaktion umgesetzt, so daß ein verzweigtes Polyacrylat mit freien olefinisch ungesättigten Doppelbindungen erhalten wird. Die erhaltene Verbindung A) kann dann mit den Verbindungen B) zu einem Michael-Additionsprodukt kombiniert werden. Vorteilhafterweise kommen in diesem Fall als Verbindung (1) Ester von $\alpha$, $\beta$-ungesättigten Carbonsäuren in Frage, deren Estergruppen nicht mehr als 4 bis 6 Kohlenstoffatome haben, wie z.B. Methylacrylat, Ethylacrylat, Propylacrylat, Butylacrylat, Isopropylacrylat, Isobutylacrylat, Pentylacrylat, die entsprechenden Methacrylate sowie die entsprechenden Ester der Fumarsäure, Maleinsäure, Crotonsäure, Dimethylacrylsäure. Die Verbindungen (1) werden in bekannten Umesterungsreaktionen mit den OH-Gruppen des verzweigten Acrylatcopolymerisats (P) umgesetzt.

Im folgenden werden weitere Herstellungsmethoden für die Komponente A) beschrieben :

Vorteilhafterweise basiert die Komponente A) auf einem löslichen vorvernetzten Acrylatcopolymerisat (P), dessen, Komponente b) ein Hydroxylgruppen enthaltendes Monomer ist und wobei das hydroxylgruppenhaltige Acrylatcoplymerisat mit einer $\alpha$, $\beta$-ungesättigten Carbonsäure (Verbindung (1)) umgesetzt wird. Die Komponente A) wird in diesem Fall durch Veresterung eines hydroxlgruppenhaltigen verzweigten Acrylatcopolymerisats mit einer ungesättigten Carbonsäure erhalten.

Weiterhin kann die Komponente A) vorteilhafterweise hergestellt werden durch Umsetzung des zuvor beschriebenen Hydroxylgruppen enthaltenden Acrylatcopolymerisats (P) mit einer Verbindung, die außer der Gruppe (I) eine Isocyanatgruppe enthält. Die Reaktion zwischen dieser Verbindung (1) und dem verzweigten Acrylatcoplymerisat erfolgt in diesem Fall unter Ausbildung einer Urethanbindung. Die Verbindung (1), die neben der Gruppe (I) eine Isocyanatfunktion enthält, ist vorteilhafterweise ein Isocyanatoalkylester einer ungesättigten Carbonsäure der allgemeinen Formel

$$CH_2 = \overset{\overset{\displaystyle R}{\displaystyle |}}{C} - \overset{\overset{\displaystyle O}{\displaystyle ||}}{C} - O - X - NCO,$$

$$\text{wobei } R = H, \ CH_3, \ C_2H_5$$
$$\text{und} \quad X = (CH_2)_n \ \cdot \text{mit } n = 1\text{-}12$$

bedeuten ; sie kann aber auch m-Isopropenyl-$\alpha$, $\alpha$-dimethylbenzylisocyanat sein oder ausgewählt sein aus der Gruppe der Umsetzungsprodukte von Diisocyanaten mit OH-, NH-, SH- oder COOH-funktionellen Derivaten der Acrylsäure, Methacrylsäure, Fumarsäure, Maleinsäure, Crotonsäure und Dimethylacrylsäure.

Vorteilhafterweise wird zur Herstellung der Komponente A) das verzweigte, Hydroxylgruppen enthaltende Acrylatcopolymerisat mit einer Verbindung (1) umgesetzt, die ein Alkoxymethylgruppen enthaltendes Amid einer $\alpha$, $\beta$-ungesättigten Carbonsäure ist oder der allgemeinen Formel

$$CH_2 = \underset{\underset{}{\overset{R}{|}}}{C} - \underset{\underset{}{\overset{O}{\|}}}{C} - \underset{\underset{}{\overset{R^1}{|}}}{N} - X - COOR^2 \qquad \text{mit} \quad R = H, CH_3$$

$$R^1 = H, \text{Alkyl, Aryl}$$

$$R^2 = \text{Alkyl}$$

$$X = \underset{\underset{O}{\|}}{-C-}, \ \underset{\underset{R^1}{|}}{-CH-}, \ \underset{\underset{OR^1}{|}}{-CH-}, \ \underset{\underset{COOR^1}{|}}{-CH-}$$

entspricht,

Beispiele für solche Verbindungen sind Methoxymethylacrylamid, Methoxymethylmethacrylamid, Butoxymethylacrylamid, Butoxymethylmethacrylamid, Isobutoximethylacrylamid, Isobutoximethylmethacrylamid, analoge Amide der Fumarsäure, Crotonsäure und der Dimethylacrylsäure, Glykolsäurederivate, wie Methylacrylamidoglykolatmethylether, Butylacrylamidoglykolatbutylether, Methylacrylamidoglykolat und Butylacrylamidoglykolat.

Die Komponente A), die auf einem verzweigten löslichen Acrylatcopolymerisat basiert und mindestens zwei aktivierte Doppelbindungen enthält, kann auch hergestellt werden durch Umsetzung eines Epoxidgruppen enthaltenden Acrylatcopolymerisats und einer Verbindung (1), die außer (I) eine Carboxal- oder Aminogruppe enthält. In diesem Fall wird als Monomer b) zur Herstellung des Acrylatcopolymerisats P) ein Epoxidgruppen enthaltendes Monomer, wie z.B. Glycidylester ungesättigter Carbonsäuren oder Glycidylether von ungesättigten Verbindungen eingesetzt. Als Beispiele für die Komponente b) seien genannt: Glycidylacrylat, Glycidylmethacrylat, Glycidylester der Malein- und Fumarsäure, Glycidylvinylphthalat, Glycidylallylphtalat, Glycidylallylmalonat. Die Epoxidgruppen des Acrylatcopolymerisats werden dann mit den Carboxyl- oder Aminogruppen der Verbindung (1) umgesetzt. Die Verbindung (1) ist vorteilhafterweise ausgewählt aus der Gruppe Acrylsäure, Methacrylsäure, Crotonsäure, Dimethylacrylsäure, Fumarsäuremonomethylester, Umsetzungsprodukte aus Carbonsäureanhydriden und Hydroxyalkylestern α, β-ungesättigter Säuren, wie Addukte aus Hexahydrophthalsäureanhydrid, Phthalsäureanhydrid, Tetrahydrophthalsäureanhydrid oder Maleinsäureanhydrid und Hydroxyethyl(meth)acrylat, Hydroxypropyl(meth)acrylat, Hydroxybutyl(meth)acrylat. Die Verbindung (1) kann weiterhin t-Butylaminoethyl(meth)acrylat, Bisacrylamidoessigsäure oder Bis(acrylamidoethyl)amin sein. Besonders bevorzugt werden Verbindungen mit mehreren aktivierten Doppelbindungen eingesetzt, wie z.B. Bisacrylamidoessigsäure.

Das verzweigte lösliche Acrylatcopolymerisat (P) kann als funktionelles Monomer b) Monomere mit Esterfunktionen enthalten. Vorteilhafterweise sollte der Veresterungsalkohol nicht mehr als 6 Kohlenstoffatome enthalten. Zur Herstellung der Komponente A) wird das auf diese Weise hergestellte Acrylatcopolymerisat mit einer Verbindung (1) umgesetzt, die neben der Gruppe (I) eine OH–, NH– oder SH-Gruppe aufweist. Als Komponente b) kommen Alkylester von Acrylsäure, Methacrylsäure, Crotonsäure, Malein- und Fumarsäure in Frage, wie z.B. die entsprechenden Methyl-, Ethyl-, Propyl-, Isoproyl-, Butyl-, Isobutyl- und Pentylester in Frage. Längerkettige Alkoholreste in der Estergruppe sind weniger günstig, da ihre Umesterung und ihr Abdestillieren nach der Umesterung zu hohe Temperaturen erfordert. Außerdem kommen Aminoalkylester der genannten α, β-ungesättigten Carbonsäuren in Frage. Die Komponente A) wird dann durch Umesterungs- oder Umamidierungsreaktionen erhalten. Diese Reaktionen sind dem Fachmann bekannt und bedürfen keiner weiteren Erläuterung.

Es können auch Isocyanatgruppen enthaltende verzweigte Acrylatcopolymerisate zur Herstellung der Komponente A) eingesetzt werden. In diesem Fall werden als Monomer b) NCO-Gruppen enthaltende Monomere eingesetzt. Das erhaltene Isocynantgruppen aufweisende Acrylatcopolymerisat wird dann mit Verbindungen (1) umgesetzt, die neben der Gruppe (I) OH–, NH–, SH– oder COOH-Gruppen enthalten. In diesem Fall können die Monomeren b) ausgewählt sein aus der Gruppe vinylischer Isocyanate, wie z.B. Vinylisocyanat und m-Isopropenyl-α, α-dimethylbenzylisocanat, Isocyanatoalkylester α, β-ungesättigter Carbonsäuren der allgemeinen Formel

$$CH_2 = \overset{\overset{\displaystyle R}{\displaystyle |}}{C} - \overset{\overset{\displaystyle O}{\displaystyle \|}}{C} - O - X - NCO,$$

wobei $R = H$, $CH_3$, $C_2H_5$

und $X = (CH_2)_n$ mit $n = 1-12$

bedeuten.

Als Komponente b) können auch Addukte beispielsweise von Isophorondiisocyanat an Hydroxyalkyl(meth)acrylate, wie z.B. Hydroxyethylmethacrylat, eingesetzt werden. Es ist vorteilhaft, für die Addition solche Verbindungen auszuwählen, die neben der OH–, NH–, SH–, oder COOH-Gruppe zwei oder mehr Strukturelemente (I) enthalten, Auf diese Weise werden mit einem Additionsschritt zwei oder mehr Doppelbindungen vom Typ (I) eingeführt. Dies ist insofern günstig, da bei der Addition von Hydroxylgruppen an Isocyanatgruppen Urethan- bzw. Harnstoffgruppen gebildet werden, die im allgemeinen die Viskosität der Bindemittel stark erhöhen, was nicht immer wünschenswert ist. Als Beispiel hierfür seien aufgeführt die Umsetzungsprodukte aus Acrylsäure oder Methacrylsäure oder einer anderen $\alpha$, $\beta$-ethylenisch ungesättigten Carbonsäure und Glycidylacrylat bzw. Glycidylmethacrylat. Durch diese Umsetzung entsteht eine freie Hydroxylgruppe, die dann an die NCO-Gruppen des Acrylatcopolymerisats addiert wird.

Vorteilhafterweise kann die Monomerkomponente b) zur Herstellung des Acrylatcopolymers ein Alkoxymethylgruppen enthaltendes Amid einer $\alpha$, $\beta$-ungesättigten Carbonsäure oder eine Verbindung der allgemeinen Formel

$$CH_2 = \overset{\overset{\displaystyle R}{\displaystyle |}}{C} - \overset{\overset{\displaystyle O}{\displaystyle \|}}{C} - \overset{\overset{\displaystyle R^1}{\displaystyle |}}{N} - X - COOR^2$$

sein, mit $R = H$, $CH_3$

$R^1 = H$, Alkyl, Aryl

$R^2 = $ Alkyl

$$X = \underset{\underset{\displaystyle O}{\displaystyle \|}}{-C-}, \quad \underset{\underset{\displaystyle R^1}{\displaystyle |}}{-CH-}, \quad \underset{\underset{\displaystyle OR^1}{\displaystyle |}}{-CH-}, \quad \underset{\underset{\displaystyle COOR^1}{\displaystyle |}}{-CH-}$$

In diesem Fall werden als Verbindung (1) Verbindungen eingesetzt, die außer der Gruppe (I) OH–, NH– oder SH-Gruppen enthalten. Beispiele für die Monomeren b) sind N-Alkoxymethyl(meth)acrylamide, wie Methoxymethylacrylamid, Methoxymethylmethacrylamid, Isobutoxymethylacrylamid, Isobutoxymethylmethacrylamid und Isobutoxymethylmethacrylamid, Außerdem sind geeignet die Alkoxy(meth)acrylamidoglykolatalkylether.

Selbstverständlich kann auch die Komponente B), die als Michael-Donator dient und aktive Wasserstofatome aufweist, auf dem löslichen verzweigten Acrylatcopolymerisat basieren. Nachfolgend werden einige Herstellungsmethoden für die Komponente B), die aus einem Acrylatcopolymerisat mit einer funktionellen Gruppe und der Verbindung (2) erhalten wird, dargestellt.

Vorzugsweise enthält das lösliche verzweigte Acrylatcopolymerisat Hydroxylgruppen, die in einer nachfolgenden Reaktion mit den Verbindungen (2) reagieren. Die Verbindungen (2) enthalten neben dem aktiven Wasserstoffatom oder der Gruppe mit aktiven Wasserstoffatomen eine Ester- oder Säuregruppe. Vorzugsweise werden in diesem Fall die Monomeren b) ausgewählt aus der Gruppe der Hydroxyalkylester $\alpha$, $\beta$-ungesättigter Carbonsäuren. Die Verbindungen (2) werden bevorzugt ausgewählt aus der Gruppe Acetessigsäure, Cyanessigsäure, Malonsäure, Cyclopentanoncarbonsäure, Cyclohexanoncarbonsäure sowie der jeweiligen Alkylester.

Die Monomeren b) können auch Monomeren mit Glycidylgruppen sein. In diesem Fall wird das Epoxidgruppen enthaltende verzweigte Acrylatcopolymerisat umgesetzt mit (2), wobei diese Verbindung neben aktivem Wasserstoff Carboxyl- oder Aminogruppen aufweisen. Monomere mit Glycidylgruppen wurden bereits zuvor genannt. Geeignete Verbindungen (2) sind Acetessigsäure, Cyanessigsäure, Malonsäure, Cyclopentanoncarbonsäure, Cyclohexanoncarbonsäure. Vorzugsweise wird die Komponente B) erhalten durch Reaktion eines Carboxylgruppen enthaltenden Acrylatcopolymerisats mit Verbindungen (2), die Umsetzungsprodukte eines Polyepoxids mit n Mol Epoxygruppen und (n–1) Mol einer Verbindung mit Carboxyl- oder Amino-Gruppen und der Gruppe mit aktivem Wasserstoff darstellen. Als Beispiel hierfür sei das Umsetzungsprodukt aus einem Mol Trimethylolpropantriglycidylether und zwei Mol Cyanessigsäure oder zwei Mol Acetessigsäure genannt. In diesem Fall werden als Monomerkomponente b).

Carboxylgruppen enthaltende ethylenisch ungesättigte Monomere, beispielsweise Acrylsäure oder Methacrylsäure, eingesetzt.

Besonders bevorzugt ist ein Verfahren zur Herstellung einer härtbaren Zusammensetzung, bei dem das lösliche verzweigte Acrylatcopolymerisat erhältlich ist durch Copolymerisation von

a) 3 bis 30 Gew.-% Dimethacrylaten und/oder Divinylverbindungen,
b) 5 bis 60 Gew.-% ethylenisch ungesättigten Monomeren mit einer funktionellen Gruppe,
c) 5 bis 91 Gew.-% ethylenisch ungesättigten Monomeren und
d) 0,1 bis 20 Gew.-% ethylenisch ungesättigten Monomeren mit einer tertiären Aminogruppe.

Beispiele für die Komponente d) sind N,N'-Dimethylaminoethylmethacrylat, N,N'-Diethylaminoethylmethacrylat, 2-Vinylpyridin und 4-Vinylpyridin, Vinylpyrrolin, Vinylchinolin, Vinylisochinolin, N,N'-Dimethylaminoethylvinylether und 2-Methyl-5-vinylpyridin. In disem Fall enthalten die Komponenten A) und/oder B) also tertiäre Aminogruppen, welche die Vernetzungsreaktion katalysieren. Weiterhin katalysieren diese tertiaren Aminogruppen beispielsweise Umesterungsreaktionen mit Acrylsäureestern oder Methacrylsäureestern, was wünschenswert sein kann.

Bei der Herstellung des Acrylatcopolymeren (P) ist darauf zu achten, daß ein vorvernetztes, aber nicht geliertes Copolymerisat erhalten wird. Dies ist durch geeignete Polymerisationsbedingungen möglich. Durch die Verwendung von Monomeren mit mindestens zwei ethylenisch ungesättigten Gruppen wird eine Vorvernetzung des Acrylatcopolymerisats hervorgerufen, die aufgrund der speziellen Reaktionsbedingungen trotzdem nicht zu gelierten Produkten führt. Wichtig ist, daß die Polymerisation bei Temperaturen von 80 bis 130°C, vorzugsweise bei 90 bis 120°C, bei relativ niedrigem Polymerisationsfestkörper von etwa 50 Gew.-% durchgeführt wird. Als Polymerisationsregler werden vorzugsweise Mercaptogruppen enthaltende Verbindungen, vorzugsweise Mercaptoethanol, verwendet. Die Auswahl des Reglers richtet sich insbesondere nach der Art der Monomerkomponente b). Enthält die Monomerkomponente b) Alkylestergruppen und soll anschließend mit Alkoholen oder Aminen umgeestert bzw. umamidiert werden, so ist es sinnvoll, wenig oder gar keine Mercaptoalkohole als Regler einzusetzen, da sonst bei der Umesterung bzw. Umamidierung die Gefahr einer vorzeitigen Gelierung besteht.

Handelt es sich bei der Monomerkomponente b) um ein OH-Monomer und soll das erhaltene Hydroxylgruppen enthaltende Acrylatcopolymerisat mit einer Carboxylgruppen enthaltenden Verbindung in einer Veresterungsreaktion umgesetzt werden, so ist es sinnvoll, weniger oder gar keine Mercaptocarbonsäuren als Regler zu verwenden, da sonst eine Gelierungsgefahr besteht. Es sei an dieser Stelle erwähnt, daß z.B. 2-Mercaptopropionsäure in diesen Fällen trotzdem einsetzbar ist, da diese Verbindung eine Carboxylgruppe an einem sekundären gesättigten Kohlenstoffatom besitzt und somit weniger reaktiv ist als eine $\alpha$, $\beta$-ungesättigte Carbonsäure.

Es muß immer eine Abstimmung zwischen den Monomeren b) und der Auswahl des Regler erfolgen, des weiteren können z.B. primäre Mercaptane und ethylenisch ungesättigte Monomere mit Isocyanatgruppen sowie Glycidylgruppen enthaltende ethylenisch ungesättigte Monomere und Mercaptocarbonsäuren als Regler nicht miteinander kombiniert werden.

Die Auswahl des Polymerisationsinitiators richtet sich nach dem Anteil der eingesetzten mehrfach ethylenisch ungesättigten Monomeren. Bei niedrigem Anteil kann man die für solche Temperaturen üblichen Initiatoren, wie z.B. Peroxyester, verwenden. Ist der Anteil der mehrfach ethylenisch ungesättigten Monomeren höher, werden vorzugsweise Initiatoren, wie z.B. Azoverbindungen, eingesetzt.

Bei den Reaktionen des funktionellen Acrylatcopolymerisats (P) mit den Verbindungen (1) und (2), die zur Bildung der Komponenten (A) bzw. (B) führen, handelt es sich in Abhängigkeit von der Art der funktionellen Gruppe des Acrylatcopolymerisats um dem Fachmann bekannte Reaktionen, wie z.B. Veresterungsreaktionen, Umesterungsreaktionen, Umamidierungsreaktionen, Additionsreaktionen unter Bildung von Urethanbindungen, Harnstoffbindungen, $\beta$-Hydroxyester-Gruppen.

Die Reaktion zwischen den Komponenten (A), der Michael-Akzeptor-Komponente, und der Komponente (B), der Michael-Donator-Komponente, wird durch Basen katalysiert. Die Katalysatoren werden kurz vor Verarbeitung des Gemisches aus den Komponenten A) und B) zugefügt. Aus der US-PS 4,408,018 sind als Katalysatoren für die Michael-Addition starke Basen, wie Alkalihydroxyde oder Alkalialkoholate, bekannt. Diese führen jedoch zu einer starken Vergilbung und Trübung des Überzugsmittels.

In der vorliegenden Erfindung können alle möglichen Katalysatoren für die Michael-Addition verwendet werden, sofern sie nicht zur Vergilbung der Überzugsmittel führen. Geeignete Basen, die als Katalysatoren für die Michael-Addition dienen können, sind in der DE-OS 35 08 399 beschrieben.

Auf den Einsatz von Katalysatoren kann in dem Fall weitgehend verzichtet werden, wenn in der Komponente A) und/oder in der Komponente B) tertiäre Aminogruppen vorhanden sind. In diesem Fall ist es ratsam, die Komponenten A) und B) erst kurz vor der Verarbeitung miteinander zu vermischen.

Geeignete Michael-Katalysatoren sind beispielsweise Katalysatoren aus der Gruppe Diazabicyclo-oktan, Halogenide von quaternären Ammoniumverbindungen, allein oder im Gemisch mit Kieselsäurealkylestern, Amidine, organische Phoshoniumsalze, tertiäre Phosphane, quartäre Ammoniumverbindungen oder Alkalialkoholate. Die Menge des Katalysators beträgt im allgemeinen 0,01 bis 5, vorzugsweise 0,02 bis 2 Gew.-%, bezogen auf den Gesamtfeststoffgehalt des Ausgangsproduktes.

Die Erfindung betrifft auch die nach dem zuvor beschriebenen Verfahren hergestellten härtbaren Zusammensetzungen.

Die erfindungsgemäßen härtbaren Zusammensetzungen härten aus im Temperaturbereich von Raumtemperatur bis etwa 100°C, können aber auch bei höheren Temperaturen eingesetzt werden.

Durch die niedrigen Aushärtungstemperaturen sind sie insbesondere geeignet für die Autoreparaturlackierung.

Sie können allerdings auch als Klarlack, Füller oder Decklack sowie als Metallpigmente enthaltenden Basislack oder als Klarlack einer Mehrschicht-Metallic-Lackierung verwendet werden.

Die aus den härtbaren Zusammensetzungen erhaltenen Überzüge weisen eine sehr gute Lösemittelbeständigkeit und Chemikalienfestigkeit auf.

Nachfolgend wird die Erfindung anhand von Ausführungsbeispielen näher erläutert :

Herstellung eines erfindungsgemäßen verzweigten Acrylates P1 :

In einem 4 Liter-Edelstahlkessel werden vorgelegt und auf 100°C aufgeheizt :

    477 Teile Xylol
    477 Teile Cumol

In den Monomerentank werden eingewogen und gemischt :

    150 Teile Hexandioldiacrylat
    250 Teile Hydroxyethylmethacrylat
    150 Teile Ethylhexylmethacrylat
    200 Teile Tert.-butylmethacrylat
    100 Teile Cyclohexylmethacrylat
    150 Teile Styrol
    38 Teile Mercaptoethanol

In den Initiatortank werden eingewogen und gemischt :

    28 Teile 2,2'-Azobis (2-methylbutannitril)
    56 Teile Xylol
    56 Teile Cumol

Der Inhalt des Monomerentanks wird in 3 Stunden zudosiert, der Inhalt des Initiatortanks wird in 3,5 Stunden zudosiert. Die Zuläufe werden gleichzeitig gestartet, und während der Polymerisation wird die Temperatur auf 110°C gehalten. Die so erhaltene klare Acrylatharzlösung hat eine Viskosität von 2,9 dPas und einen Festkörper von 51%.

Herstellung von Komponente A1 :

In einem Edelstahlkessel werden 920 Teile der Acrylatharzlösung P1 mit 369 Teilen Ethylacrylat und 2,46 Teilen Hydrochinonmonomethylether und 4,92 Teilen Dibutylzinnoxid versetzt und langsam auf 80 bis 100°C aufgeheizt. Es wird ständig ein Luftstrom durch den Kessel geleitet. Nach mehreren Stunden bei dieser Temperatur wird langsam unter Abdestillieren (über Kolonne) von Ethanol die Temperatur auf 120°C gesteigert, es werden insgesamt 520 Teile Ethanol und überschüssiges Ethylacrylat und etwas Lösemittel abdestilliert ; anschließend wird mit 257 Teilen Butylacetat angelöst.

Der Festkörper der so erhaltenen Komponente A1 beträgt 54,7%, die Viskosität liegt bei 1,3 dPas.

Herstellung der Komponente B1 :

In einem Edelstahlkessel werden 960 Teile der Acrylatharzlösung P1 mit 108 Teilen Acetessigsäureethylester versetzt und langsam auf 80 bis 100°C aufgeheizt. Unter langsamem Aufheizen auf 130°C wird Ethanol über eine Kolonne abdestilliert. Die so erhaltene Komponente B1 hat einen Festkörper von 55,7% und eine Viskosität von 2,1 dPas.

Herstellung der Acrylatharzlösung P2 :

In einem 4 Liter-Edelstahlkessel werden vorgelegt und auf 110°C erhitzt :

    483 Teile Xylol
    483 Teile Cumol

In den Monomerentank werden unter Mischen eingewogen :

    150 Teile Hexandioldiacrylat
    250 Teile Hydroxyethylmethacrylat
    150 Teile Ethylhexylacrylat
    100 Teile Cyclohexylmethacrylat
    200 Teile tert.-Butylacrylat
    150 Teile Styrol
    38 Teile Mercaptoethanol

In den Initiatortank werden eingewogen und vermischt :

    24 Teile 2,2′-Azobis(2-methylbutannitril)
    48 Teile Xylol
    48 Teile Cumol

Der Inhalt des Monomerentanks wird in 3 Stunden, der Inhalt des Initiatortanks wird in 3,5 Stunden zudosiert, dabei wird die Temperatur im Kessel auf 110°C gehalten, der Initiatorzulauf wird 10 Minuten später als der Monomerenzulauf gestartet ; es wird nach Zulaufende 3 Stunden nachpolymerisiert. Die so erhaltene klare Acrylatharzlösung P2 hat eine Viskosität von 4,6 dPas und einen Festkörper von 50,2%.

Herstellung der Komponente B2 :

    1041 Teile der Acrylatharzlösung P2 und 138 Teile Acetessigsäureethylester werden in einem Edelstahlkessel auf 80 bis 100°C aufgeheheizt. Danach wird langsam unter Abdestillieren von Ethanol über eine Kolonne auf 130°C hochgeheizt. Die so hergestellte Komponente B2 hat eine Viskosität von 2,2 dPas und einen Festkörper von 54,8%.

Herstellung und Prüfung von Klarlackauszügen :

Klarlack 1 :

    15,85 Teile Trimethylolpropantriacrylat und
    84,15 Teile Komponente B2 und
    0,4 Teile 1,8-Diazabicyclo(5, 4, 0)-7-undecene
werden vermischt und mit 150 µm Naßfilmstärke auf Glasplatten aufgerakelt und wie angegeben getrocknet.
    30 min/80°C :
Pendelhärte nach Ofen : 175 sek ; nach 3 Stunden superbenzinbeständig.
    Raumtemperatur :
Pendelhärte nach 6 Stunden : 160 sek ; nach 6 Stunden superbenzinbeständig.

Klarlack 2 :

    39,89 Teile Umsetzungsprodukt aus einem Mol trimerisiertes Hexamethylendiisocyanat und drei Mol Hydroxybutylacrylat und
    60,11 Teile Komponente B1 und
    0,4 Teile 1,8-Diazabicyclo(5, 4, 0)-7-undecene
werden vermischt und mit 150 µm Naßfilmstärke auf Glasplatten aufgerakelt und wie angegeben getrocknet.

30 min/80°C :
Pendelhärte nach Ofen : 175 sek ; nach 3 Stunden superbenzinbeständig.
Raumtemperatur :
Pendelhärte nach 6 Stunden : 81 sek ; nach 6 Stunden superbenzinbeständig.


**Ansprüche**

1. Verfahren zur Herstellung einer härtbaren Zusammensetzung, enthaltend als Michael-Akzeptor-Komponente A) Verbindungen mit mindestens zwei aktivierten Doppelbindungen (I), wobei es sich um α, β-ungesättigte Carbonylverbindungen, α, β-ungesättigte Carbonsäureester oder α, β-ungesättigte Nitrilgruppen handelt, und als Michael-Donator Verbindungen B), die mindestens zwei aktive Wasserstoffatome oder mindestens zwei Gruppen mit aktiven Wasserstoffatomen oder mindestens ein aktives Wasserstoffatom und mindestens eine Gruppe mit einem aktiven Wasserstoffatom enthalten und übliche Zusatzstoffe, Katalysatoren, ggf. Pigmente und organisches Lösungsmittel, dadurch gekennzeichnet, daß zunächst ein lösliches, verzweigtes Acrylatcopolymerisat (P) hergestellt wird durch Copolymerisation von

a) 3 bis 30 Gew.-% Monomeren mit mindestens zwei ethylenisch ungesättigten polymerisierbaren Doppelbindungen,
b) 5 bis 60 Gew.-% Monomeren mit einer funktionellen Gruppe und
c) bis zu 92 Gew.-% weiteren ethylenisch ungesättigten Monomeren, wobei die Summe von a), b) und c) 100 Gew.-% berägt, in einem organischen Lösungsmittel bei 80 bis 130°C, vorzugsweise bei 90 bis 120°C, unter Verwendung von mindestens 0,5 Gew.-%, vorzugsweise mindestens 2,5 Gew.-%, bezogen auf das Gesamtgewicht der Monomeren a), b) und c), eines Polymerisationsreglers und unter Verwendung von Polymerisationsinitiatoren, wobei ein vorvernetztes, nicht geliertes Produkt erhalten wird und anschließend das lösliche verzweigte Acrylatcopolymerisat (P) unter Bildung von (A) mit einer Verbindung (1) umgesetzt wird, die neben einer mit der funktionellen Gruppe der Monomeren b) von (P) reaktionsfähigen Gruppe mindestens eine aktivierte Doppelbindung (I) enthält, und/oder das verzweigte lösliche Acrylatcopolymerisat (P) unter Bildung von (B) mit einer Verbindung (2) umgesetzt wird, die außer einer mit der funktionellen Gruppe der Monomeren b) von (P) reaktionsfähigen Gruppe mindestens ein aktives Wasserstoffatom oder mindestens eine Gruppe mit einem aktiven Wasserstoffatom enthält, und (A) und (B) in organischem Lösungsmittel ggf. mit Pigmenten und üblichen Zusatzstoffen durch Mischen und ggf. Dispergieren zu einer härtbaren Zusammensetzung verarbeitet werden und kurz vor der Anwendung zur Aushärtung ein Michael-Katalysator zugefügt wird.

2. Verfahren nach Anspruch 1, dadurch gekennzeichnet, daß die Komponente b) ein Hydroxylgruppen enthaltendes Monomer und die Verbindung (1) ein Monoester einer α, β-ungesättigten Carbonsäure ist.

3. Verfahren nach Anspruch 1, dadurch gekennzeichnet, daß die Komponente b) des Acrylatcopolymerisats ein Hydroxylgruppen enthaltendes Momoner ist und die Verbindung (1) eine α, β-ungesättigte Carbonsäure ist.

4. Verfahren nach Anspruch 1, dadurch gekennzeichnet, daß die Komponente b) des Acrylatcopolymerisat ein Hydroxylgruppen enthaltendes Monomer ist und die Verbindung (1) außer der Gruppe (I) eine Isocyanatgruppe enthält.

5. Verfahren nach Anspruch 1, dadurch gekennzeichnet, daß die Komponente b) des Acrylatcopolymerisats ein Hydroxylgruppen enthaltendes Monomer ist und die Verbindung (1) ein Alkoxymethylgruppen enthaltendes Amid einer α, β-ungesättigten Carbonsäure ist oder die Verbindung (1) der allgemeinen Formel

$$CH_2 = \overset{\overset{\displaystyle R}{|}}{C}-\overset{\overset{\displaystyle O}{\|}}{C}-\overset{\overset{\displaystyle R^1}{|}}{N}-X-COOR^2$$

entspricht,

mit R = H, $CH_3$

R$^1$ = H, Alkyl, Aryl

R$^2$ = Alkyl

$$X = -\overset{\overset{\displaystyle }{\|}}{\underset{O}{C}}-, \quad -\overset{}{\underset{R^1}{CH}}-, \quad -\overset{}{\underset{OR^1}{CH}}-, \quad -\overset{}{\underset{COOR^1}{CH}}-$$

6. Verfahren nach Anspruch 1, dadurch gekennzeichnet, daß das Monomer b) eine Epoxidgruppe enthält und die Verbindung (1) außer (I) eine Carboxyl- oder Aminogruppe aufweist.

7. Verfahren nach Anspruch 1, dadurch gekennzeichnet, daß die Komponente b) eine Esterfunktion enthält, wobei der Veresterungsalkohol nicht mehr als 6 Kohlenstoffatome enthält, und die Verbindung (1) außer der Gruppe (I) eine OH–, NH– oder SH-Gruppe enthält.

8. Verfahren nach Anspruch 1, dadurch gekennzeichnet, daß die Monomeren b) Isocyanatgruppen enthalten und die Verbindung (1) außer der Gruppe (I) OH–, NH–, SH– oder COOH-Gruppen aufweisen.

9. Verfahren nach Anspruch 1, dadurch gekennzeichnet, daß b) ein Alkoxymethylgruppen enthaltendes Amid einer $\alpha$, $\beta$-ungesättigten Carbonsäure oder eine Verbindung der allgemeinen Formel

$$CH_2 = \overset{\overset{\displaystyle R}{|}}{C}-\overset{\overset{\displaystyle O}{\|}}{C}-\overset{\overset{\displaystyle R^1}{|}}{N}-X-COOR^2$$

mit R = H, $CH_3$

R$^1$ = H, Alkyl, Aryl

R$^2$ = Alkyl

$$X = -\overset{\overset{\displaystyle }{\|}}{\underset{O}{C}}-, \quad -\overset{}{\underset{R^1}{CH}}-, \quad -\overset{}{\underset{OR^1}{CH}}-, \quad -\overset{}{\underset{COOR^1}{CH}}-$$

ist und die Verbindung (1) außer der Gruppe (I) OH–, NH– oder SH-Gruppen aufweist.

10. Verfahren nach Anspruch 1, dadurch gekennzeichnet, daß die Monomerkomponente b) ein Hydroxylgruppen enthaltendes Monomer ist und die Verbindung (2) neben den aktiven Wasserstoffatomen oder der Gruppe mit aktiven Wasserstoffatomen eine Ester- oder Säuregruppe enthält.

11. Verfahren nach Anspruch 1, dadurch gekennzeichnet, daß b) Monomere mit Glycidylgruppen sind und (2) als mit (P) reaktionsfähige Gruppe eine COOH– oder NH-Gruppe enthält.

12. Verfahren nach Anspruch 1, dadurch gekennzeichnet, daß die Monomerkomponente b) eine Carboxylgruppe enthält und die Verbindung (2) ein Umsetzungsprodukt eines Polyepoxids mit n Mol Epoxygruppen und (n-1) Mol einer Verbindung mit COOH– oder NH-Gruppen ist und zusätzlich aktiven Wasserstoff enthält.

13. Verfahren nach Anspruch 2, dadurch gekennzeichnet, daß die Verbindung (1) Ester $\alpha$, $\beta$-ethylenisch ungesättigter Carbonsäuren sind, deren Alkoholkomponente bis zu 6 Kohlenstoffatome aufweisen.

14. Verfahren nach Anspruch 4, dadurch gekennzeichnet, daß die Verbindung (1) ein Isocyanatoalkylester ungesättigter Carbonsäuren der allgemeinen Formel

$$CH_2 = \overset{\overset{\displaystyle R}{|}}{C} - \overset{\overset{\displaystyle O}{\|}}{C} - O - X - NCO,$$

wobei  $R = H,\ CH_3,\ C_2H_5$

und  $X = (CH_2)_n$  mit  $n = 1\text{-}12$

bedeuten oder daß die Verbindung (1) m-Isopropenyl-$\alpha$, $\alpha$-dimethylbenzylisocyanat ist oder ausgewählt ist aus der Gruppe der Umsetzungsprodukte von Diisocyanaten mit OH–, NH–, SH– oder COOH-funktionellen Derivaten der Acrylsäure, Methacrylsäure, Fumarsäure, Maleinsäure, Crotonsäure und Dimethylacrylsäure.

15. Verfahren nach Anspruch 5, dadurch gekennzeichnet, daß die Verbindung (1) ausgewählt ist aus der Gruppe Methoxymethylacrylamid, Methoxymethylmethacrylamid, Butoxymethylacrylamid, Butoxymethylmethacrylamid, Isobutoxymethylacrylamid, Isobutoxymethylmethacrylamid, analoge Amide der Fumarsäure, Crotonsäure und der Dimethylacrylsäure, Methylacrylamidoglykolatmethylether, Butylacrylamidoglykolatbutylether, Methylacrylamidoglykolat, Butylacrylamidoglykolat.

16. Verfahren nach Anspruch 6, dadurch gekennzeichnet, daß die Verbindung (1) ausgewählt ist aus der Gruppe Acrylsäure, Methacrylsäure, Crotonsäure, Dimethylacrylsäure, Fumarsäuremonomethylester, der Umsetzungsprodukte aus Säureanhydriden und Hydroxyalkylestern $\alpha$, $\beta$-ungesättigter Säuren, oder t-Butylaminoethyl(meth)acrylat oder Bisacrylamidoessigsäure oder Bis(acrylamidoethyl)amin.

17. Verfahren nach Anspruch 7, dadurch gekennzeichnet, daß die Verbindung b) ausgewählt ist aus der Gruppe der Alkylester $\alpha$, $\beta$-ungesättigter Carbonsäuren, wie Methyl-, Ethyl-, Propyl-, Butyl-, Isobutyl-, Isopropyl-, Hexylester der Acrylsäure, Methacrylsäure, Fumarsäure, Crotonsäure, Dimethylacrylsäure und der Aminoalkylester der zuvor genannten $\alpha$, $\beta$-ungesättigten Carbonsäuren.

18. Verfahren nach Anspruch 8, dadurch gekennzeichnet, daß die Monomeren b) ausgewählt sind aus der Gruppe m-Isopropenyl-$\alpha$, $\alpha$-dimethylbenzylisocyanat, der Isocyanatoalkylester $\alpha$, $\beta$-ungesättigter Carbonsäuren und der Addukte von Isophorondiisocyanat an Hydroxyalkyl-(meth)acrylate.

19. Verfahren nach Anspruch 9, dadurch gekennzeichnet, daß b) ausgewählt ist aus der Gruppe N-Alkoxymethyl(meth)acrylamid, Alkoxy(meth)acrylamidoglykolatalkylether.

20. Verfahren nach Anspruch 10, dadurch gekennzeichnet, daß die Monomeren b) Hydroxyalkylester $\alpha$, $\beta$-ungesättigter Carbonsäuren sind und die Verbindung (2) ausgewählt ist aus der Gruppe Acetessigsäure, Cyanessigsäure, Malonsäure, Cyclopentanoncarbonsäure, Cyclohexanoncarbonsäure sowie der jeweiligen Alkylester.

21. Verfahren nach Anspruch 11, dadurch gekennzeichnet, daß die Verbindung (2) ausgewählt ist aus der Gruppe Acetessigsäure, Cyanessigsäure, Malonsäure, Cyclopentanoncarbonsäure, Cyclohexanoncarbonsäure.

22. Verfahren nach Anspruch 12, dadurch gekennzeichnet, daß die Verbindung (2) ein Umsetzungsprodukt aus einem Mol Trimethylolpropan-Triglycidylether und zwei Mol Cyanessigsäure oder zwei Mol Acetessigsäure ist.

23. Härtbare Zusammensetzung, erhältlich nach dem Verfahren gemäß einem der Ansprüche 1 bis 22.

24. Verwendung der härtbaren Zusammensetzung nach Anspruch 23 für die Autoreparaturlackierung.

25. Verwendung der härtbaren Zusammensetzung nach Anspruch 23 als Klarlack, Füller oder Decklack.

26. Verwendung der härtbaren Zusammensetzung nach Anspruch 23 als Metallpigmente enthaltender Basislack und/oder als Klarlack einer Mehrschicht-Metallic-Lackierung.

## Claims

1. Process for the preparation of a curable composition containing as Michael acceptor component A) compounds with at least two activated double bonds (I), these being $\alpha$, $\beta$-unsaturated carbonyl compounds, $\alpha$, $\beta$-unsaturated carboxylic acid esters or $\alpha$, $\beta$-unsaturated nitriles, and as Michael donor compounds B) which contain at least two active hydrogen atoms or at least two groups with active hydrogen atoms or at least one active hydrogen atom and at least one group with an active hydrogen atom, and customary additives, catalysts, if appropriate pigments and an organic solvent, characterised in that a branched soluble acrylate copolymer (P) is initially prepared by copolymerisation of

a) 3 to 30% by weight of monomers with at least two ethylenically unsaturated polymerisable double bonds,

b) 5 to 60% by weight of monomers with a functional group and

c) up to 92% by weight of other ethylenically unsaturated monomers, the sum of a), b) and c) being 100% by weight, in an organic solvent at 80 to 130°C, preferably at 90 to 120°C, using at least 0.5% by weight, preferably at least 2.5% by weight, based on the total weight of the monomers a), b) and C), of a polymerisation regulator and using polymerisation initiators, to give a pre-crosslinked, non-gelled product, and subsequently reacting the soluble branched acrylate copolymer (P) with a compound (1) which, in addition to a group which can react with the functional group of the monomers b) of (P), contains at least one activated double bond (I), to give (A), and/or reacting the branched soluble acrylate copolymer (P) with a compound (2) which, in addition to a group which can react with the functional group of the monomers b) of (P), contains at least one active hydrogen atom or at least one group with an active hydrogen atom, to give (B), and processing (A) and (B) in an organic solvent, if appropriate with pigments and the customary additives, to a curable composition by mixing and, if appropriate, dispersing, and, shortly before use, adding a Michael catalyst for complete curing.

2. Process according to Claim 1, characterised in that component b) is a monomer containing hydroxyl groups and the compound (1) is a monoester of an $\alpha$, $\beta$-unsaturated carboxylic acid.

3. Process according to Claim 1, characterised in that component b) of the acrylate copolymer is a monomer containing hydroxyl groups and the compound (1) is an $\alpha$, $\beta$-unsaturated carboxylic acid.

4. Process according to Claim 1, characterised in that component b) of the acrylate copolymer is a monomer containing hydroxyl groups and the compound (1) contains an isocyanate group in addition to the group (I).

5. Process according to Claim 1, characterised in that component b) of the acrylate copolymer is a monomer containing hydroxyl groups and the compound (1) is an amide, containing alkoxyethyl groups, of an $\alpha$, $\beta$-unsaturated carboxylic acid, or the compound (1) corresponds to the general formula

$$CH_2 = \overset{\overset{\displaystyle R}{|}}{C} - \overset{\overset{\displaystyle O}{\|}}{C} - \overset{\overset{\displaystyle R^1}{|}}{N} - X - COOR^2$$

in which

R = H or $CH_3$,

$R^1$ = H, alkyl or aryl,

$R^2$ = alkyl and

$$X = \quad \underset{O}{\overset{\|}{-C-}}, \quad \underset{R^1}{\overset{|}{-CH-}}, \quad \underset{OR^1}{\overset{|}{-CH-}}, \quad \underset{COOR^1}{\overset{|}{-CH-}}$$

6. Process according to Claim 1, characterised in that the monomer b) contains an epoxide group and the compound (1) contains a carboxyl or amino group in addition to (I).

7. Process according to Claim 1, characterised in that component b) contains an ester function, the esterifying alcohol containing not more than 6 carbon atoms, and the compound (1) contains an OH, NH or SH group in addition to the group (I).

8. Process according to Claim 1, characterised in that the monomers b) contain isocyanate groups and the compound (1) contains OH, NH, SH or COOH groups in addition to the group (I).

9. Process according to Claim 1, characterised in that b) is an amide, containing alkoxymethyl groups, of an $\alpha$, $\beta$-unsaturated carboxylic acid, or a compound of the general formula

13

$$CH_2 = \overset{\overset{\displaystyle R}{|}}{C} - \overset{\overset{\displaystyle O}{\|}}{C} - \overset{\overset{\displaystyle R^1}{|}}{N} - X - COOR^2 \qquad 4$$

in which

R  = H or CH₃,

R¹ = H, alkyl or aryl,

R² = alkyl and

X  =  $-\overset{\overset{\displaystyle}{\|}}{\underset{O}{C}}-$, $-\overset{\overset{\displaystyle}{|}}{\underset{R^1}{CH}}-$, $-\overset{\overset{\displaystyle}{|}}{\underset{OR^1}{CH}}-$, $-\overset{\overset{\displaystyle}{|}}{\underset{COOR^1}{CH}}-$

and the compound (1) contains OH, NH or SH groups in addition to the group (I).

10. Process according to Claim 1, characterised in that the monomer component b) is a monomer containing hydroxyl groups and the compound (2) contains an ester or acid group in addition to the active hydrogen atoms or the group with active hydrogen atoms.

11. Process according to Claim 1, characterised in that b) are monomers with glycidyl groups and (2) contains a COOH or NH group as group which can react with (P).

12. Process according to Claim 1, characterised in that the monomer component b) contains a carboxyl group and the compound (2) is a reaction product of a polyepoxide with n mol of epoxy groups and (n-1) mol of a compound with COOH or NH groups and in addition contains active hydrogen.

13. Process according to Claim 2, characterised in that the compound (1) are [sic] esters of α, β-ethylenically unsaturated carboxylic acids, the alcohol component [sic] of which have up to 6 carbon atoms.

14. Process according to Claim 4, characterised in that the compound (1) is an isocyanatoalkyl ester of unsaturated carboxylic acids of the general formula

$$CH_2 = \overset{\overset{\displaystyle R}{|}}{C} - \overset{\overset{\displaystyle O}{\|}}{C} - O - X - NCO,$$

in which
R = H, CH₃ or CH₂H₅ and
X = (CH₂)ₙ, where n = 1-12,
or in that the compound (1) is m-isopropenyl-α, α-dimethylbenzyl isocyanate or is chosen from the group comprising reaction products of diisocyanates with OH–, NH–, SH– or COOH-functional derivatives of acrylic acid, methacrylic acid, fumaric acid, maleic acid, crotonic acid and dimethylacrylic acid.

15. Process according to Claim 5, characterised in that the compound (1) is chosen from the group comprising methoxymethylacrylamide, methoxymethylmethacrylamide, butoxymethylacrylamide, butoxymethylmethacrylamide, isobutoxymethylacrylamide, isobutoxymethylmethacrylamide, analogous amides of fumaric acid, crotonic acid and dimethylacrylic acid, N-methylacryloyl-O-methylglycolamide,N-butylacryloyl-O-butylglycolamide,N-methylacryloylglycolamide and N-butylacryloylglycolamide.

16. Process according to Claim 6, characterised in that the compound (1) is chosen from the group comprising acrylic acid, methacrylic acid, crotonic acid, dimethylacrylic acid, monomethyl fumarate, the reaction products of acid anhydrides and hydroxyalkyl esters of α, β-unsaturated acids, or t-butylaminoethyl methacrylate or bisacrylamidoacetic acid or bis(acrylamidoethyl)amine.

17. Process according to Claim 7, characterised in that the compound b) is chosen from the group comprising alkyl eaters of α, β-unsaturated carboxylic acids, such as methyl, ethyl, propyl, butyl, isobutyl, isopropyl and hexyl esters of acrylic acid, methacrylic acid, fumaric acid, crotonic acid and dimethylacrylic acid, and the aminoalkyl esters of the abovementioned α, β-unsaturated carboxylic acids.

18. Process according to Claim 8, characterised in that the monomers b) are chosen from the group comprising m-isopropenyl-α, β-dimethylbenzylisocyanate, isocyanatoalkyl esters of α, β-unsaturated carboxylic acids and adducts of isophorone diisocyanate on hydroxyalkyl (meth)acrylates.

19. Process according to Claim 9, characterised in that b) is chosen from the group comprising N-alkoxymethyl(meth)acrylamide and N-alkoxy(meth)acryloyl-O-alkylglycolamides.

20. Process according to Claim 10, characterised in that the monomers b) are hydroxyalkyl esters of α, β-unsaturated carboxylic acids and the compound (2) is chosen from the group comprising acetoacetic acid, cyanoacetic acid, malonic acid, cyclopentanonecarboxylic acid, cyclohexanonecarboxylic acid and the particular alkyl esters.

21. Process according to Claim 11, characterised in that the compound (2) is chosen from the group comprising acetoacetic acid, cyanoacetic acid, malonic acid, cyclopentanonecarboxylic acid and cyclohexanonecarboxylic acid.

22. Process according to Claim 12, characterised in that the compound (2) is a reaction product of one mol of trimethylolpropane triglycidyl ether and two mols of cyanoacetic acid or two mols of acetoacetic acid.

23. Curable composition obtainable by the process according to one of Claims 1 to 22.

24. Use of the curable composition according to Claim 23 for automobile refinishing.

25. Use of the curable composition according to Claim 23 as a clear coat, filler or top coat.

26. Use of the curable composition according to Claim 23 as an undercoat containing metallic pigments and/or as a clear coat in a multi-layer metallic coating.


## Revendications

1. Procédé de fabrication d'une composition durcissable, contenant, comme composant accepteur de Michael (A), des composés ayant au moins deux doubles liaisons activées (I), où il s'agit de composés carbonylés à insaturation α, β, d'esters d'acides carboxyliques à insaturation α, β ou de groupes nitriles à insaturation α, β, et, comme donneur de Michael, des composés (B), qui contiennent au moins deux atomes d'hydrogène actif ou au moins deux groupes ayant des atomes d'hydrogène actif ou au moins un atome d'hydrogène actif et au moins un groupe ayant un atome d'hydrogène actif, et des additifs usuels, catalyseurs, le cas échéant pigments et solvants organiques, caractérisé par le fait qu'on prépare tout d'abord un copolymère d'acrylate (P), ramifié, soluble, par copolymérisation de :

(a) 3 à 30% en poids de monomères ayant au moins deux doubles liaisons d'insaturation éthylénique polymérisables,

(b) 5 à 60% en poids de monomères ayant un groupe fonctionnel, et

(c) jusqu'à 92% en poids d'autres monomères à insaturation éthylénique, la somme de (a), (b) et (c) s'élevant à 100% en poids, dans un solvant organique, à une température de 80 à 130°C, de préférence, à une température de 90 à 120°C, avec utilisation d'au moins 0,5% en poids, de façon préférée, d'au moins 2,5% en poids, par rapport au poids total des monomères (a), (b) et (c), d'un régulateur de polymérisation, et avec utilisation d'initiateurs de polymérisation, où l'on obtient un produit non-gélifié, préréticulé, puis qu'on fait réagir le copolymère d'acrylate (P), ramifié, soluble, avec formation de (A), avec un composé (1) qui contient, en dehors d'un groupe susceptible de réagir avec le groupe fonctionnel des monomères (b) de (P), au moins une double liaison activée (I), et/ou qu'on fait réagir le copolymère d'acrylate (P) soluble, ramifié, avec formation de (B), avec un composé (2), qui contient, en dehors d'un groupe susceptible de réagir avec le groupe fonctionnel des monomères (b) de (P), au moins un atome d'hydrogène actif ou au moins un groupe ayant un atome d'hydrogène actif, et on transforme (A) et (B), dans un solvant organique, le cas échéant avec des pigments et des additifs usuels, par mélange et, le cas échéant, dispersion, en une composition durcissable, et, peu de temps avant l'application, on ajoute, en vue du durcissement, un catalyseur de Michael.

2. Procédé selon la revendication 1, caractérisé par le fait que le composant (b) est un monomère contenant des groupes hydroxyle et le composé (1) est un monoester d'un acide carboxylique à insaturation α, β.

3. Procédé selon la revendication 1, caractérisé par le fait que le composant (b) du copolymère d'acrylate est un monomère renfermant des groupes hydroxyle, et le composé (1) est un acide carboxylique à insaturation α, β.

4. Procédé selon la revendication 1, caractérisé par le fait que le composant (b) du copolymère d'acrylate est un monomère contenant des groupes hydroxyle, et le composé (1) contient, en dehors du groupe (I), un groupe isocyanate.

5. Procédé selon la revendication 1, caractérisé par le fait que le composant (b) du copolymère d'acrylate est un monomère contenant des groupes hydroxyle, et le composé (1) est un amide contenant des groupes alcoxyméthyle d'un acide carboxylique à insaturation α, β, ou le composé (1) correspond a la formule générale:

$$CH2 = \underset{\underset{R}{|}}{C} - \underset{\underset{O}{\|}}{C} - \underset{\underset{R^1}{|}}{N} - X - COOR^2$$

avec

- R = H, CH$_3$
- R$^1$ = H, alkyle, aryle
- R$^2$ = alkyle
- X = $-\underset{\underset{O}{\|}}{C}-$, $-\underset{\underset{R^1}{|}}{CH}-$, $-\underset{\underset{OR^1}{|}}{CH}-$, $-\underset{\underset{COOR^1}{|}}{CH}-$

6. Procédé selon la revendication 1, caractérisé par le fait que le monomère (b) contient un groupe époxyde, et le composé (1) présente, en dehors de (I), un groupe carboxyle ou amino.

7. Procédé selon la revendication 1, caractérisé par le fait que le composant (b) contient une fonction ester, l'alcool d'estérification ne contenant pas plus de 6 atomes de carbone, et le composé (1) contenant, en dehors du groupe (I), un groupe OH, NH ou SH.

8. Procédé selon la revendication 1, caractérisé par le fait que les monomères (b) contiennent des groupes isocyanate et que le composé (1) présente, en dehors du groupe (I), des groupes OH, NH, SH, ou COOH.

9. Procédé selon la revendication 1, caractérisé par le fait que (b) est un amide contenant des groupes alcoxyméthyle d'un acide carboxylique à insaturation $\alpha$, $\beta$ ou un composé de la formule générale :

$$CH2 = \underset{\underset{R}{|}}{C} - \underset{\underset{O}{\|}}{C} - \underset{\underset{R^1}{|}}{N} - X - COOR^2$$

avec

- R = H, CH$_3$
- R$^1$ = H, alkyle, aryle
- R$^2$ = alkyle
- X = $-\underset{\underset{O}{\|}}{C}-$, $-\underset{\underset{R^1}{|}}{CH}-$, $-\underset{\underset{OR^1}{|}}{CH}-$, $-\underset{\underset{COOR^1}{|}}{CH}-$

et le composé (1) contient, en dehors du groupe (I), des groupes OH, NH ou SH.

10. Procédé selon la revendication 1, caractérisé par le fait que le composant monomère (b) est un monomère contenant des groupes hydroxyle, et le composé (2) contient, en dehors des atomes d'hydrogène actif ou du groupe ayant des atomes d'hydrogène actif, un groupe ester ou acide.

11. Procédé selon la revendication 1, caractérisé par le fait que (b) consiste en des monomères ayant des groupes glycidyle, et (2) renferme, comme groupe susceptible de réagir avec (P), un groupe COOH ou NH.

12. Procédé selon la revendication 1, caractérisé par le fait que le composant monomère (b) contient un groupe carboxyle, et le composé (2) est un produit de réaction d'un polyépoxyde avec n moles de groupes époxyde et (n-1) moles d'un composé ayant des groupes COOH ou NH, et contient additionnellement de l'hydrogène actif.

13. Procédé selon la revendication 2, caractérisé par le fait que le composé (1) consiste en esters d'acides carboxyliques à insaturation $\alpha$, $\beta$ éthylénique, dont les composants alcool présentent jusqu'à 6 atomes de carbone.

14. Procédé selon la revendication 4, caractérisé par le fait que le composé (1) signifie des esters isocyanatoalkyliques d'acides carboxyliques insaturés de la formule générale :

$$CH_2 = \overset{\overset{\displaystyle R}{\displaystyle |}}{C} - \overset{\overset{\displaystyle O}{\displaystyle \|}}{C} - O - X - NCO \, ,$$

où R = H, CH$_3$, C$_2$H$_5$

et X = (CH$_2$)n avec n = 1–12.

ou que le composé (1) est l'isocyanate de m-isopropényl-α, α-diméthylbenzyle ou est choisi dans le groupe des produits de réaction de diisocyanates avec des dérivés à fonctionnalité OH, NH, SH ou COOH de l'acide acrylique, de l'acide méthacrylique, de l'acide fumarique, de l'acide maléique, de l'acide crotonique et de l'acide diméthylacrylique.

15. Procédé selon la revendication 5, caractérisé par le fait que le composé (1) est choisi dans le groupe constitué par le méthoxyméthylacrylamide, le méthoxyméthylméthacrylamide, le butoxyméthylacrylamide, le butoxyméthylméthacrylamide, l'isobutoxyméthylacrylamide, l'isobutoxyméthylméthacrylamide, les amides analogues de l'acide fumarique, de l'acide crotonique et de l'acide diméthylacrylique, l'éther méthylique du méthylacrylamidoglycolate, l'éther butylique du butylacrylamidoglycolate, le méthylacrylamidoglycolate, le butylacrylamidoglycolate.

16. Procédé selon la revendication 6, caractérisé par le fait que le composé (1) est choisi dans le groupe constitué par l'acide acrylique, l'acide méthacrylique, l'acide crotonique, l'acide diméthylacrylique, l'ester monométhylique de l'acide fumarique, les produits de réaction des anhydrides d'acides et des esters hydroxyalkyliques d'acides à insaturation α, β, ou le (méth)acrylate de t-butylaminoéthyle ou l'acide bisacrylamidoacétique ou la bis(acrylamidoéthyl)amine.

17. Procédé selon la revendication 7, caractérisé par le fait que le composé (b) est choisi dans le groupe constitué par les esters alkyliques d'acides carboxyliques à insaturation α, β, comme les esters méthylique, éthylique, propylique, butylique, isobutylique, isopropylique, hexylique, de l'acide acrylique, de l'acide méthacrylique, de l'acide fumarique, de l'acide crotonique, de l'acide diméthylacrylique, et les esters aminoalkyliques des acides carboxyliques à insaturation α, β préalablement cités.

18. Procédé selon la revendication 8, caractérisé par le fait que les monomères (b) sont choisis dans le groupe constitué par l'isocyanate de m-isopropényl-α, α-diméthylbenzyle, les esters isocyanatoalkyliques d'acides carboxyliques α, β insaturés et les produits d'addition du diisocyanate d'isophorone sur les (méth)-acrylates d'hydroxyalkyle.

19. Procédé selon la revendication 9, caractérisé par le fait que (b) est choisi dans le groupe constitué par N-alcoxyméthyl(méth)acrylamide, et les éthers alkyliques d'alcoxy(méth)acrylamidoglycolates.

20. Procédé selon la revendication 10, caractérisé par le fait que les monomères (b) sont des esters hydroxyalkyliques d'acides carboxyliques à insaturation α, β, et le composé (2) est choisi dans le groupe constitué de l'acide acétylacétique, de l'acide cyanacétique, de l'acide malonique, de l'acide cyclopentanone carboxylique, de l'acide cyclohexanone carboxylique, de même que les esters alkyliques respectifs.

21. Procédé selon la revendication 11, caractérisé par le fait que le composé (2) est choisi dans le groupe constitué par l'acide acétylacétique, l'acide cyanacétique, l'acide malonique, l'acide cyclopentanone carboxylique, l'acide cyclohexanone carboxylique.

22. Procédé selon la revendication 12, caractérisé par le fait que le composé (2) est un produit de réaction d'une mole de triglycidyléther du triméthylolpropane et de deux moles d'acide cyanacétique ou de deux moles d'acide acétylacétique.

23. Composition durcissable, que l'on peut obtenir par le procédé tel que défini à l'une des revendications 1 à 22.

24. Utilisation de la composition durcissable telle que définie à la revendication 23 pour le laquage de réparation des automobiles.

25. Utilisation de la composition durcissable telle que définie à la revendication 23 comme laque transparente, masse de remplissage ou laque de recouvrement.

26. Utilisation de la composition durcissable telle que définie à la revendication 23 comme laque de base renfermant des pigments métalliques et/ou comme laque transparente d'un laquage métallique à plusieurs couches.